# EUROPÄISCHE PATENTSCHRIFT

(11) **EP 0 815 609 B1**
(45) Veröffentlichungstag und Bekanntmachung des Hinweises auf die Patenterteilung: **31.05.2000**
(21) Anmeldenummer: 96900857.2
(22) Anmeldetag: 23.01.1996
(51) Int. Cl.: H01M 8/24, H01M 8/10, H01M 8/02, H01M 6/42, H01M 6/46

(54) **ZUSAMMENFASSUNG VON EINZELZELLEN ZU EINER MEMBRANELEKTRODEN-EINHEIT UND DEREN VERWENDUNG**
ASSEMBLY OF SINGLE CELLS TO FORM A DIAPHRAGM ELECTRODE UNIT
ASSEMBLAGE DE CELLULES INDIVIDUELLES POUR FORMER UNE UNITE D'ELECTRODES MEMBRANAIRES ET SON UTILISATION

(30) Priorität: 26.01.1995 DE 19502391
(43) Veröffentlichungstag der Anmeldung: 07.01.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: LEDJEFF, Konstantin, D-79189 Bad Krozingen (DE); NOLTE, Roland, D-79211 Denzlingen (DE)
(74) Vertreter: Pfenning, Meinig & Partner
(86) Internationale Anmeldenummer: DE9600111
(87) Internationale Veröffentlichungsnummer: WO9623323

(56) Entgegenhaltungen:
- EP-A- 0 198 483
- WO-A-94/25995
- WO-A-95/04382
- FR-A- 1 452 564
- US-A- 3 554 809

## Beschreibung

Die Erfindung betrifft eine Zusammenfassung von Einzelzellen zu einer Membranelektrodeneinheit, bei der die Einzelzellen durch treppenförmige Übereinanderlagerung der Elektrodenflächen hintereinander geschaltet sind und dessen Verwendung in einer Polymer-Elektrolyt-Membran-Brennstoffzelle.

Elektrochemische Zellen z.B. mit polymeren Festelektrolyten (PEM), bestehen vereinfachend aus zwei Elektroden, an denen die elektrochemischen Reaktionen ablaufen, sowie einem dazwischenliegenden Elektrolyten, der die Aufgabe des Ionentransportes zwischen den Elektroden erfüllt und der aus einem ionenleitenden Polymer besteht.

Laufen an beiden Elektroden freiwillig elektrochemische Reaktionen ab (Oxidation an der Anode, Reduktion an der Kathode), so liefert die elektrochemische Zelle eine Spannung. Eine einzelne Zelle liefert nur eine relativ kleine Spannung im Bereich einiger Millivolt bis hin zu einigen Volt. Für viele praktische Anwendungen, wie beispielsweise für die Anwendung von Batterie-Brennstoffzellen im Traktionsbereich werden allerdings wesentlich höhere Spannungen benötigt.

Bisher werden deshalb eine Vielzahl solcher Zellen separat aufgebaut, hintereinander angeordnet und elektrisch in Reihe verschaltet, so daß sich die Spannungen der Einzelzellen addieren (bipolare Stackbauweise). Diese Art der Reihenschaltung ermöglicht zwar die Realisierung höherer Spannungen, ist jedoch mit erheblichen Nachteilen verbunden. So ist der konstruktionstechnische Aufwand einer derartigen Reihenschaltung sehr hoch. Man benötigt so z.B. für einen Wasserstoff-/Sauerstoff-Brennstoffzellenstack im allgemeinen für jede Einzelzelle eine bipolare Platte, einen Wasserstoff-Gasverteilerring, eine mit Katalysator beschichtete Ionenaustauschermembran, einen Sauerstoff-Gasverteilerring, Dichtungsringe zum Abdichten dieser Komponenten sowie die Stromverteilerstrukturen. Diese sind insgesamt 10 Komponenten je Einzelzelle. Soll nun beispielsweise eine Stackausgangsspannung von 70 V realisiert werden, so sind bei einer Einzelzellenspannung von 0,7 V immerhin 100 Einzelzellen nötig, d.h. 1.000 Komponenten müssen zusammengefügt werden, wobei 400 Dichtungsringe fixiert werden müssen.

Weiter nachteilig ist aufgrund der Reihenschaltung, daß bei Ausfall einer einzigen Zelle im Brennstoffzellenstack der gesamte Stack zusammenbricht. Eine redundante Bauweise für obiges Beispiel, d.h. die Parallelschaltung mehrerer 70 V Stacks würde jedoch den Konstruktionsaufwand in nicht mehr tragbare Bereiche treiben. Entscheidend für die effiziente Betriebsweise einer PEM-Brennstoffzelle ist demnach der Aufbau der Membranelektrodeneinheit.

Ausgehend hiervon, ist es daher die Aufgabe der vorliegenden Erfindung eine Membranelektrodeneinheit anzugeben, die vorrangig für den Einsatz im PEM-Brennstoffzellen geeignet ist, wobei diese Membranelektrodeneinheit eine hohe Ausgangsspannung sowie einen einfachen und kostengünstigen Aufbau besitzen soll.

Die Aufgabe wird durch die kennzeichnenden Merkmale des Anspruches 1 gelöst. Die Unteransprüche zeigen vorteilhafte Weiterbildungen auf.

Erfindungsgemäß wird somit vorgeschlagen, eine Membranelektrodeneinheit in der Weise aufzubauen, daß eine Zusammenfassung von mehreren Einzelzellen vorgesehen ist, wobei die Zusammenfassung so vorgenommen wird, daß sich die Elektrodenflächen treppenförmig überlagern, wobei im Überlappungsbereich Querleitstrukturen eingearbeitet sind.

Die erfindungsgemäße Membran-Elektroden-Einheit besteht aus ionisch leitfähigen Membranbezirken, die beiseitig mit Elektrodenmaterial kontaktiert sind. Im Falle einer Wasserstoff/Sauer-Brennstoffzelle ist dann jeder Membranbezirk auf der einen Seite mit einer Wasserstoffelektrode und auf der gegenüberliegenden Seite mit einer Sauerstoffelektrode kontaktiert. Alle Wasserstoffelektroden befinden sich somit auf einer Membranseite, alle Sauerstoffelektrode auf der anderen Membranseite. Jeder Membranbezirk bildet zusammen mit den zwei kontaktierten Elektroden eine Brennstoffzellen-Einheit und liefert somit eine Ausgangsspannung. Charakteristisch für die erfindungsgemäße Membran-Elektroden-Einheit ist nun, daß jede Einzelzelle innerhalb der Membran in Reihe verschaltet ist. Dies wird erfindungsgemäß dadurch realisiert, daß unter treppenförmiger Überlappung der Elektrodenfläche eine Einzelzelle mit der gegenüberliegenden Elektrodenfläche der nächsten Einzelzelle eine Reihenverschaltung realisiert wird. Somit addieren sich alle Ausgangsspannungen jeder Einzelzelle auf. Auf diese Weise kann dann die Summe der Spannungen aller Brennstoffzellen-Einheiten, z.B. an der ersten Elektrode der Membranoberseite und der letzten Elektrode der Membranunterseite, erhalten werden. Bei der erfindungsgemäßen treppenförmigen Ausgestaltung der Membran-Elektroden-Einheit ist wichtig, daß eine sehr gute Querleitfähigkeit der einzelnen außenliegenden Elektrodenflächen erreicht wird, da der gesamte Zellstrom durch den Querschnitt dieser Beschichtung fließen muß. Es ist jedoch bekannt, daß Elektroden je nach Ausführungsform, z.B. wenn die Elektrode aus einem aufgepreßten Katalysatorpulver besteht, schlechte Querleitfähigkeit bis hin zu mehreren 100 Ohm aufweisen. Zur Vermeidung der dadurch entstehenden hohen Zellspannungsverluste verfügt die erfindungsgemäße Membran-Elektroden-Einheit über sog. Querleitstrukturen, die in den überlappenden Elektrodenflächen angeordnet sind. Somit wird der durch die schlechte Querleitfähigkeit der Elektrodenbeschichtung erzeugte Widerstand zwischen zwei benachbarten aber gegenüberliegenden Elektroden deutlich herabgesetzt. Somit steht erstmals eine Membran-Elektroden-Einheit zur Verfügung, die nicht nur eine hohe Ausgangsspannung und einen einfachen und kostengünstigen Aufbau besitzt, sondern die auch nahezu keine interne Zellspannungsverluste besitzt.

Die Einzelzelle besteht dabei, um die Ionenleitfähigkeit zu gewährleisten, aus einem ionenleitfähigen Material. Dazu werden polymere Festelektrolyten in Form von Membranen eingesetzt. Da entweder Kationen oder Anionen transportiert werden müssen, muß die Membrane entweder für Kationen oder für Anionen permeabel sein. Die Ionenleitfähigkeit ist dabei in wäßriger Umgebung für kationenleitende Polymere im allgemeinen dann gegeben, wenn im Polymer fest verankerte, d.h. im allgemeinen durch chemische Bindung verankerte Carbonsäuregruppen und/oder Sulfonsäuregruppen und/oder Phos-phonsäuregruppen vorhanden sind. Für anionenleitende Polymer ist die Ionenleitfähigkeit insbesondere dann gegeben, wenn das Polymer Aminogruppen, quartäre Ammoniumgruppen oder Pyridiniumgruppen enthält. Die Fähigkeit der Ionenleitfähigkeit wird bei den bisher beschriebenen Möglichkeiten dadurch erzeugt, daß in der Membran fest verankerte Ionen existieren oder bei Quellung in Wasser erzeugt werden.

Beispiele für kationenleitende Polymere dieses Typs sind sulfonierte Polysulfone, Polyethersulfone oder auch Polyetherketone.

Die Dicke der Membran kann dabei im Bereich zwischen 0,1 µm und 5 mm, bevorzugt im Bereich von 10 µm bis 200 µm liegen. Die Flächen der Membran für die Einzelzelle richten sich dabei nach der geforderten Leistung des Stacks. Die Flächen können im Bereich von 100 µm² bis 1 000 000 mm² liegen, bevorzugt im Bereich von 100 bis 10 000 mm².

Um die Funktion als Einzelzelle zu ermöglichen, sind nun die vorstehend beschriebenen Membranen beidseitig mit Elektrodenmaterial beschichtet. Da an den Elektroden die elektrochemischen Umsetzungen der Zelle erfolgen, können die Elektroden entweder selbst aus dem Material bestehen, das elektrochemisch umgesetzt wird, oder aus Material, welches die elektrochemische Umsetzung katalysiert. Das Material muß elektronisch leitfähig sein und besteht insbesondere aus Metallen, Metalloxiden, Mischoxiden, Legierungen, Kohlenstoff, elektronisch leitfähigen Polymeren oder Mischungen hieraus.

Die Materialien können Zusatzstoffe enthalten, die der Einstellung von Hydrophilie, Hydrophobie dienen. Damit können die Elektrodenschichten beispielsweise mit wasserabweisenden Eigenschaften ausgestattet werden. Weiter sind Zusatzstoffe möglich, die die Einstellung einer gewissen Porosität erlauben. Dies ist insbesondere dann von Bedeutung, wenn gasförmige Stoffe katalytisch an den Elektroden umgesetzt werden, wobei ein Dreiphasenkontakt zwischen Gas, Katalysator und ionenleitfähigem Bezirk erforderlich ist. Weiter können sog. Binder zugemischt werden, die die stabile und funktionsfähige Anbindung der Elektrode an den ionenleitenden Bezirk erleichtert.

Die Querleitstrukturen müssen aus Materialien bestehen, welche eine sehr gute elektronische Leitfähigkeit aufweisen. Typischerweise werden hierfür Metalle, Legierungen, leitfähige Kohlenstoffe, leitfähige Polymere oder mit leitfähigen Substanzen versetzte Polymere verwendet. Bevorzugt eingesetzt werden dünne Strukturen mit einer Dicke von 10 µm bis 500 µm, da sie sich gut in den Flächenaufbau der erfindungsgemäßen Membran-Elektroden-Einheit integrieren lassen. Weiterhin sollen die Querleitstrukturen während der Zellebensdauer stabil gegenüber den verwendeten Brennstoffen sein (z.B. Wasser/Sauerstoff in einer H₂/O₂-Brennstoffzelle) und bei den auftretenden Zellpotentialen elektrochemisch nicht angegriffen werden. Neben der guten Leitfähigkeit sollen die Querleitstrukturen dauerhaft in der Streifenmembran verankert werden können. Bevorzugt werden deshalb solche Strukturen eingesetzt, die in ihrer Beschaffenheit keine glatte Oberfläche aufweisen und beim Verkleben oder Verschmelzen mit den Membranpolymeren fest verankert werden können. Dies können z.B. Netze, Gewebe, poröse Strukturen oder Folien mit aufgerauhter Oberfläche sein. Eine solche aufrauhende Oberfläche kann beispielsweise mittels chemischer Verfahren oder durch Plasmaätzsprozesse erreicht werden.

Die Querleitstrukturen sind so ausgebildet, daß sie bis auf die außenliegenden Elektrodenflächen geführt sind. Die Querleitstrukturen können dabei die Elektrodenflächen nahezu vollständig bedecken oder nur teilweise.

Nach einer bevorzugten Ausführungsform wird weiterhin vorgeschlagen für den Fall, daß die Querleitstruktur die außenliegenden Elektrodenflächen nur teilweise bedeckt, noch zusätzlich brennstoffdurchlässige elektronisch leitfähige Verteilerstrukturen anzuordnen. Diese leitfähigen Verteilerstrukturen können entweder direkt auf der Elektrodenfläche oder über der Elektrodenfläche und der Querleitstruktur angeordnet sein. Die Aufgabe dieser Verteilerstrukturen liegt darin, die Querleitstruktur ohne signifikante elektrische Verluste an die gesamte Elektrodenoberfläche anzubinden und gleichzeitig eine Brennstoffzufuhr an der Elektrodenoberfläche zu ermöglichen. Demgemäß müssen die Verteilerstrukturen ebenfalls aus einem elektronisch leitfähigen Material bestehen. Beispiele hierfür sind Metallnetze oder Metallsinterkörper.

Die Querleitstrukturen können die Elektrodenflächen auch vollständig bedecken. In diesem Fall muß dann jedoch die Querleitstruktur im Bereich der aktiven Elektrodenflächen zusätzlich zur elektronichen Leitfähigkeit auch brennstoffdurchlässig sein, da sonst einer Versorgung der Elektroden mit Brennstoff nicht mehr möglich wäre. Auch für diese Ausführungsform der Erfindung ist es möglich und vorteilhaft, noch Verteilerstrukturen einzusetzen, die dann entweder wieder in der Anordnung Elektrodenoberfläche/Querleitstruktur/Verteilerstruktur oder Elektrodenoberfläche/Verteilerstruktur/Querleitstruktur angeordnet sind.

Die vorstehend beschriebene Zusammenfassung von flächigen Einzelzellen zu einer Elektroden-Membran-Einheit führt zu einer eindimensionalen Anordnung.

Erfindungsgemäß ist es nun auch möglich, mehrere dieser eindimensionalen Elektroden-Membran-Einheiten zu "zweidimensionalen" Elektroden-Membran-Einheiten zusammenzufassen. Hierbei sind grundsätzlich zwei Ausführungsformen möglich. Zum einen können mindestens 2 bis höchstens 50 eindimensionale Elektroden-Membran-Einheiten zusammengefaßt werden, wobei diese parallel angeordnet und parallel verschaltet sind oder diese parallel angeordneten Elektroden-Membran-Einheiten in Reihe verschaltet werden.

Durch diese Ausführungsformen sind eine nochmalige Steigerung der Ausgangsspannung bzw. eine redundante Stromversorgung möglich.

Weitere Merkmale, Einzelheiten und Vorzüge der Erfindung ergeben sich aus der folgenden Beschreibung der Erfindung anhand der Zeichnung. Hierbei zeigen:
**Figur 1** eine erfindungsgemäße Ausführungsform mit bis auf die Elektrodenaußenflächen geführten Querleitstrukturen im Querschnitt
**Figur 2** die Ausführungsform nach Fig. 1 in der Draufsicht
**Figur 3** eine Ausführungsform im Querschnitt mit auf den Querleitstrukturen angeordneten Verteilerstrukturen
**Figur 4** eine Ausführungsform im Querschnitt, bei der die Verteilerstruktur zwischen außenliegenden Elektrodenflächen und der Querleitstruktur angeordnet ist
**Figur 5** eine Ausführungsform im Querschnitt, bei der die Querleitstruktur die außenliegenden Elektrodenflächen vollständig überdeckt.

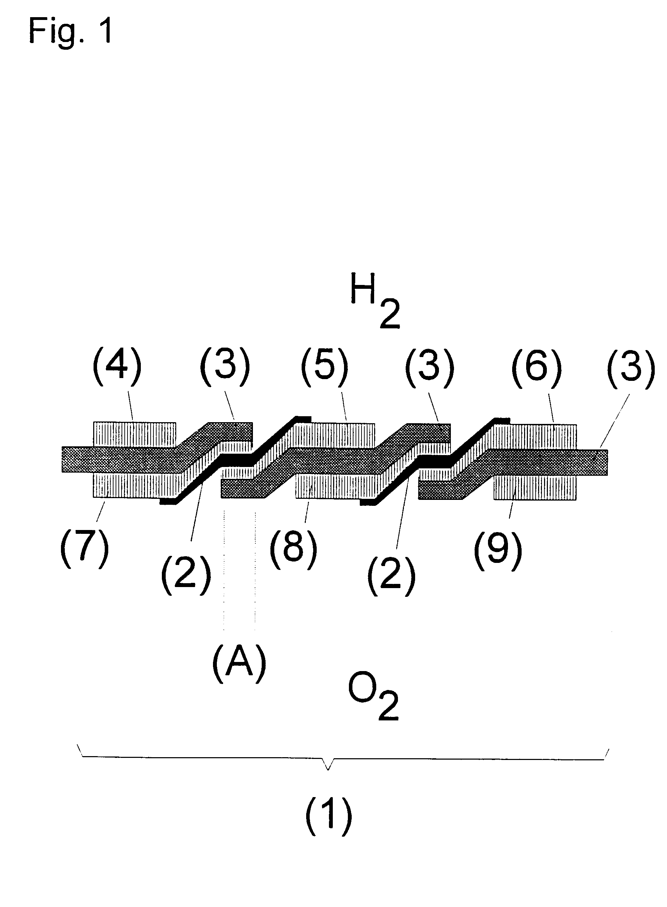

Die Elektroden-Membran-Einheit 1 nach der Ausführungsform nach **Fig. 1** besteht aus ionisch leitfähigen Membranbezirken 3, die beidseitig mit Elektrodenmaterial kontaktiert sind. Im Falle einer Wasserstoff/ Sauerstoff/Brennstoff-Zelle ist also jeder Membranbezirk 3 auf der einen Seite mit einer WasserstoffElektrode 4, 5, 6 und auf der gegenüberliegenden Membranseite mit einer Sauerstoff-Elektrode 7, 8, 9 kontaktiert. Alle Wasserstoff-Elektroden 4, 5, 6 befinden sich somit auf der einen Membranseite, alle Sauerstoff-Elektroden 7, 8, 9 auf der anderen Membranseite. Jeder Membranbezirk bildet zusammen mit den zwei kontaktierten Elektroden eine Brennstoffzellen-Einheit und liefert eine Ausgangsspannung von etwa 1 Volt ohne Belastung. Erfindungswesentlich für die Elektroden-Membran-Einheit ist nun ihre interne Reihenverschaltung der einzelnen Brennstoffzellen-Einheiten innerhalb der Elektroden-Membran-Einheit 1. Hierzu wird jeweils die untere Elektrode 7, 8 einer Brennstoffzellen-Einheit mit der oberen Elektrode 5, 6 der nächsten Brennstoffzellen-Einheit durch das leitfähige Elektrodenmaterial elektronisch leitend und brennstoffundurchlässig miteinander verbunden. Auf diese Weise kann die Summe der Spannungen aller Brennstoffzellen-Einheiten an der ersten Elektrode 4 und an der letzten Elektrode 9 der Membranunterseite erhalten werden. Um nun eine gute Querleitfähigkeit der Elektrodenflächen 5, 6 und 7, 8 zu erreichen, ist eine Querleitstruktur 2 mit guter elektronischer Leitfähigkeit zwischen den überlappenden Elektrodenflächen eingearbeitet. Erfindungsgemäß ist es hierbei ausreichend, wenn die Querleitstruktur 2 lediglich die überlappenden Elektrodenflächenbereiche (mit Symbol A gekennzeichnet) überdeckt. Bevorzugt ist es jedoch, wenn die Querleitstruktur von der Unter- zur Oberseite hindurchgeführt ist. Dabei verläuft nun die Querleitstruktur von einer Elektrodenfläche einer Zelleneinheit der Elektroden-Membran-Einheit zur gegenüberliegenden Elektrode der nächsten Zelleneinheit der Elektroden-Membran-Einheit. Auf diese Art werden die Elektrodenflächen 5, 6 bzw. 7, 8 mittels Querleitstrukturen 2 in ihrer Querleitfähigkeit entscheidend verbessert. Wichtig für die Funktion ist, daß eine gute elektronische Leitfähigkeit der Querleitstruktur vorhanden ist. Dies wird dadurch erreicht, daß entsprechend elektronisch leitfähige Marterialien eingesetzt werden. Wesentlich bei dem erfindungsgemäßen Konzept ist weiterhin, daß bei der Durchführung der Querleitstrukturen 2 durch die Elektroden-Membran-Einheit keine Brennstoffdurchlässigkeit von der einen Seite der Membran hin zur anderen Seite gegeben ist.

Die Herstellung einer derartigen Elektroden-Membran-Einheit erfolgt aus mit Elektrodenmaterial beschichteten polymeren Festelektrolytstücken, wobei jeweils zwischen zwei Festelektrolytstücke eine Querleitstruktur gelegt wird, die von der unteren Seite des jeweils ersten Festelektrolytstückes zur Oberseite des zweiten Festelektrolytstückes verläuft. Anschließend werden diese Anordnungen, jeweils bestehend aus Festelektrolytstück/Querleitstruktur/Festelektrolytstück, dauerhaft und brennstoffdicht miteinander verbunden. Das Verbinden der Festelektrolytstücke miteinander und mit den Querleitstrukturen kann beispielsweise mittels Verklebungstechniken mit geeigneten Klebstoffen erfolgen.

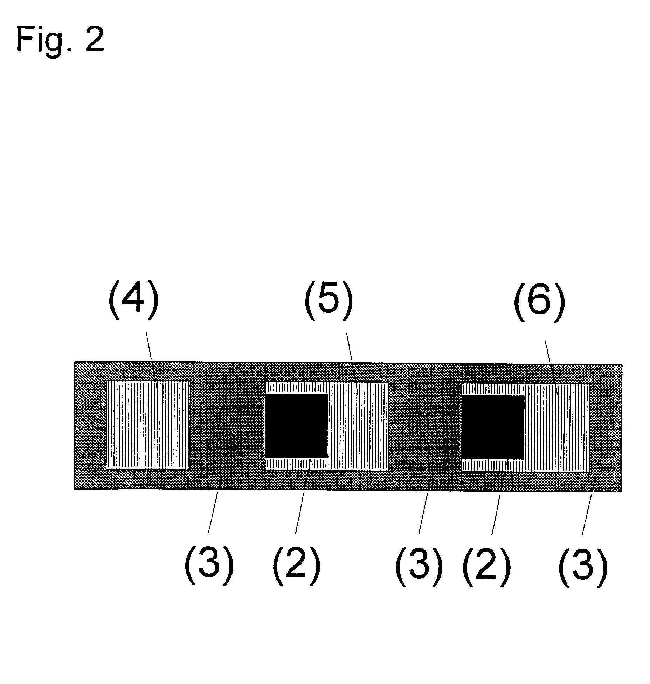

**Fig. 2** zeigt nun die vorstehend beschrieben Ausführungsform in der Draufsicht. **Fig. 2** verdeutlicht noch einmal, daß in der Ausführungsform nach **Fig. 1**0 die Querleitstruktur 2 die außenliegend Elektrodenflächen 5, 6 nur teilweise überlappen.

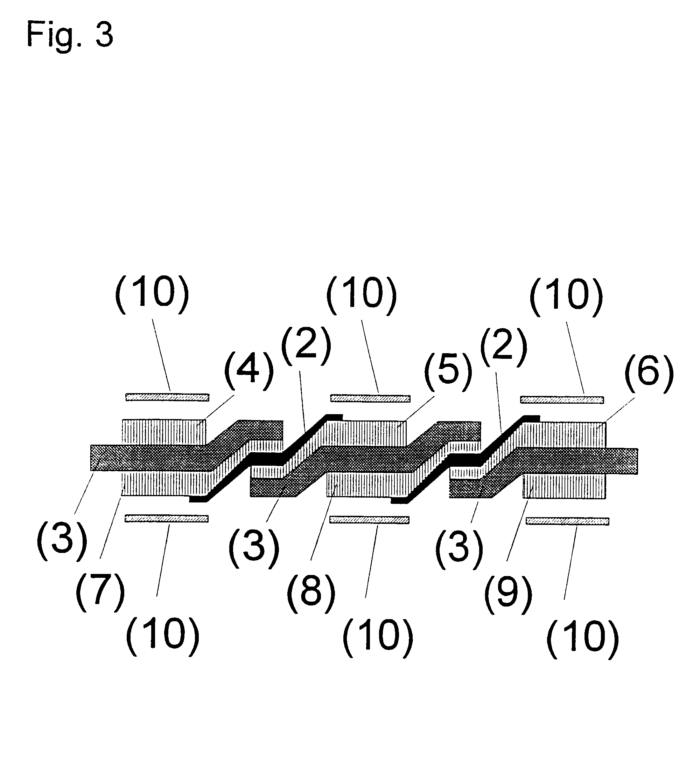

In der Ausführungsform nach **Fig. 3** liegt nun die Querleitstruktur 2 direkt auf den einzelnen Elektroden 5, 6 bzw. 7, 8. Dabei kann die Querleitstruktur 2 beispielsweise aus dichtem Material oder aus Netzen bestehen, so lange eine gute Elektrodenleitfähigkeit gegeben und ein Transport von Brennstoffen von der einen zur anderen Streifenmembranseite verhindert wird. Zusätzlich ist in der Ausführungsform nach **Fig. 3** eine brennstoffdurchlässige elektronisch leitfähige Verteilerstruktur 10 auf die Elektrodenfläche mit der Querleitstruktur 2 aufgelegt mit der Aufgabe, die Querleitstruktur ohne signifikante Verluste elektrisch an die gesamte Elektrodenfläche anzubinden und gleichzeitig eine Brennstoffzufuhr an die Elektrodenoberfläche zu ermöglichen.

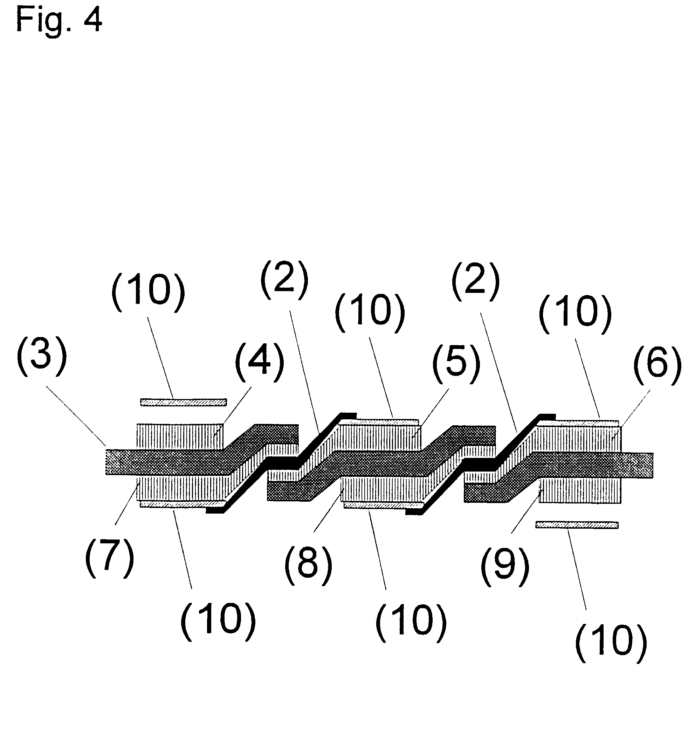

**Fig. 4** zeigt nun eine andere Ausführungsform und zwar eine Variante, bei der die brennstoffdurchlässige elektronisch leitfähige Verteilerstruktur 10 auf der Elektrodenfläche 4, 5, 6 bzw. 7, 8, 9 liegt erst hierauf die Querleitstruktur 10 angeordnet ist. Diese Anordnung hat den Vorteil, daß die Elektrodenoberfläche mechanisch gleichmäßig belastet wird, während bei der Ausführungsform nach **Fig. 3** das Ende der Querleitstruktur 2 direkt auf der Elektrodenfläche liegt, um beim Zusammenbau der Zelle in die Membran eingedrückt werden kann. Auch bei der Ausführungsform nach **Fig. 4** kann die Querleitstruktur 2 beispielsweise aus dichtem Material oder aus Netzen bestehen, so lange eine gute Elektronenleitfähigkeit gegeben und ein Transport von Brennstoffen von der einen zur Seite verhindert wird.

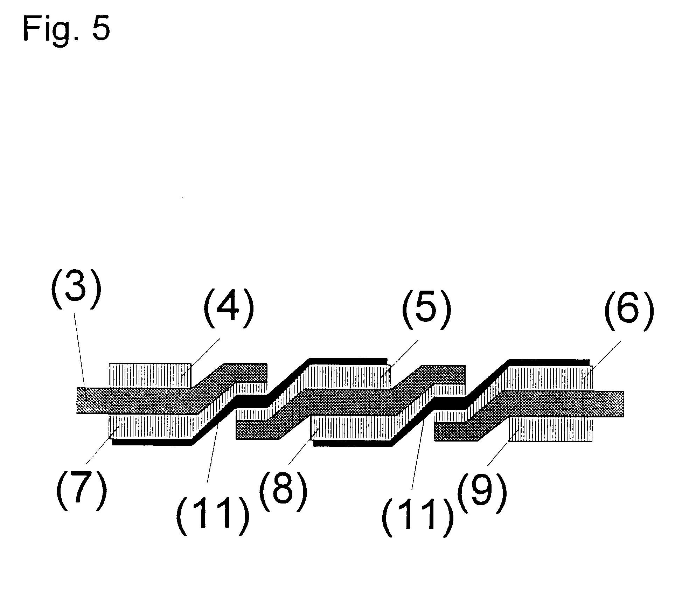

Die Querleitstrukturen können die Elektrodenflächen auch vollständig bedecken. Eine derartige Ausführungsform zeigt **Fig. 5.** In diesem Fall muß die Querleitstruktur 11 im Bereich der aktiven Elektrodenflächen zusätzlich zur elektronischen Leitfähigkeit auch brennstoffdurchlässig sein, da sonst eine Versorgung der Elektroden 5, 6 bzw. 7, 8 mit Brennstoff nicht mehr möglich wäre. Eine zusätzliche Verwendung der, wie vorstehend beschriebenen, Verteilerstrukturen ist aber auch bei dieser Ausführungsform möglich, so daß dann hier eine Anordnung Elektrodenfläche/ Querleitstruktur/Verteilerstruktur oder Elektrodenfläche/Verteilerstruktur/Querleitstruktur möglich ist.

## Patentansprüche

1. Zusammenfassung von flächigen Einzelzellen, die jeweils aus einem polymeren Festelektrolyten und darauf beidseitig aufgebrachten Elektrodenflächen bestehen, zu einer Elektrodenmembraneinheit,
**dadurch gekennzeichnet,**
daß 2 bis 10.000 Einzelzellen unter treppenförmiger Überlappung der Elektrodenflächen (4,5,6) einer Einzelzelle mit den gegenüberliegenden Elektrodenfläche (7,8,9) der nächsten Einzelzelle in Reihe geschaltet sind und so eine Elektroden-Membran-Einheit (1) bilden und daß zumindest zwischen den sich überlappenden Elektrodenflächen eine aus elektronisch leitfähigem Material gefertigte Querleitstruktur (2,11) angeordnet ist, wobei die Querleitstruktur (2,11) bis auf die außenliegenden Elektrodenflächen unter deren teilweisen Überlappungen geführt ist.

2. Zusammenfassung von Einzelzellen nach Anspruch 1,
dadurch gekennzeichnet, daß die Querleitstruktur (2,11) bis auf die außenliegenden Elektrodenfläche geführt ist, wobei die Querleitstruktur (2,11) diese Elektrodenfläche nahezu vollständig überdeckt.

3. Zusammenfassung von Einzelzellen nach Anspruch 1 oder 2,
dadurch gekennzeichnet, daß auf den außenliegenden Elektrodenflächen und der Querleitstruktur eine Verteilerstruktur (10) angeordnet ist, die zumindest teilweise brennstoffdurchlässig ausgebildet ist.

4. Zusammenfassung von Einzelzellen nach mindestens einem der Ansprüche 1 bis 3,
dadurch gekennzeichnet, daß zwischen den außenliegenden Elektrodenflächen und der Querleitstruktur (2,11) eine Verteilerstruktur (10) angeordnet ist, die zumindestens teilweise brennstoffdurchlässig ausgebildet ist.

5. Zusammenfassung von Einzelzellen nach mindestens einem der Ansprüche 1 bis 4,
dadurch gekennzeichnet, daß das elektronisch leitfähige Material der Querleitstrukturen (2,11) ausgewählt ist aus Metallen, Legierungen, leitfähigen Kohlenstoffmodifikationen, leitfähigen Polymere oder aus Mischungen davon.

6. Zusammenfassung von Einzelzellen nach mindestens einem der Ansprüche 1 bis 5,
dadurch gekennzeichnet, daß die Querleitstrukturen (2,11) eine Dicke von 0,1 bis 5 mm aufweist.

7. Zusammenfassung von Einzelzellen nach mindestens einem der Ansprüche 1 bis 6,
dadurch gekennzeichnet, daß die Querleitstrukturen (2,11) eine Struktur mit nicht glatter Oberfläche, wie z.B. Netze, Gewebe, poröse Strukturen oder Strukturen mit aufgerauhter Oberfläche ist.

8. Zusammenfassung von Einzelzellen nach mindestens einem der Ansprüche 1 bis 7,
dadurch gekennzeichnet, daß die Verteilerstruktur (10) eine elektronisch leitfähige Struktur, wie z.B. Graphitpapier oder ein Metallnetz ist.

9. Zusammenfassung von Einzelzellen nach mindestens einem der Ansprüche 1 bis 8,
dadurch gekennzeichnet, daß mindestens 2, höchstens 50 eindimensionale Elektrodenmembraneinheiten zusammengefaßt sind, wobei diese jeweils parallel angeordnet und in Reihe verschaltet sind.

10. Zusammenfassung von Einzelzellen nach mindestens einem der Ansprüche 1 bis 8,
dadurch gekennzeichnet, daß mindestens 2 bis höchstens 50 eindimensionale Elektrodenmembraneinheiten zusammengefaßt sind, wobei diese parallel angeordnet und parallel verschaltet sind.

11. Verwendung der Zusammenfassung nach mindestens einem der Ansprüche 1 bis 10 in einer Polymerelektrodenmembranzelle (PEM-Zelle).

## Claims

1. Assembly of flat individual cells, which each consist of a polymer solid electrolyte and electrode surfaces applied to both sides thereof, to form an electrode-membrane unit, characterized in that from 2 to 10,000 individual cells are connected in series, with staircase overlap of the electrode surfaces (4, 5, 6) of one individual cell with the facing electrode surface (7, 8, 9) of the next individual cell, and hence form an electrode-membrane unit (1), and in that a transverse conduction structure (2, 11) made of an electronically conductive material is arranged at least between the overlapping electrode surfaces, the transverse conduction structure (2, 11) being continued up to the outlying electrode surfaces under their partial overlaps.

2. Assembly of individual cells according to Claim 1, characterized in that the transverse conduction structure (2, 11) is continued up to the outlying electrode surface, the transverse conduction structure (2, 11) almost fully covering this electrode surface.

3. Assembly of individual cells according to Claim 1 or 2, characterized in that a distributor structure (10), which is of at least partially fuel-permeable design, is arranged on the outlying electrode surfaces and the transverse conduction structure.

4. Assembly of individual cells according to at least one of Claims 1 to 3, characterized in that a distributor structure (10), which is of at least partially fuel-permeable design, is arranged between the outlying electrode surfaces and the transverse conduction structure (2, 11).

5. Assembly of individual cells according to at least one of Claims 1 to 4, characterized in that the electronically conductive material of the transverse conduction structures (2, 11) is selected from metals, alloys, conductive carbon polymorphs, conductive polymers or from mixtures thereof.

6. Assembly of individual cells according to at least one of Claims 1 to 5, characterized in that the transverse conduction structure (2, 11) has a thickness of from 0.1 to 5 mm.

7. Assembly of individual cells according to at least one of Claims 1 to 6, characterized in that the transverse conduction structure (2, 11) is a structure with non-smooth surface, such as e.g. mesh, fabric, porous structures or structures with a roughened surface.

8. Assembly of individual cells according to at least one of Claims 1 to 7, characterized in that the distributor structure (10) is an electronically conductive structure, such as e.g. graphite paper or a metal mesh.

9. Assembly of individual cells according to at least one of Claims 1 to 8, characterized in that at least 2 and at most 50 one-dimensional electrode-membrane units are assembled, these being respectively arranged in parallel and interconnected in series.

10. Assembly of individual cells according to at least one of Claims 1 to 8, characterized in that at least 2 and at most 50 one-dimensional electrode-membrane units are assembled, these being arranged in parallel and interconnected in parallel.

11. Use of the assembly according to at least one of Claims 1 to 10 in a polymer electrolyte-membrane cell (PEM cell).

## Revendications

1. Assemblage de cellules individuelles plates, qui sont constituées respectivement d'un électrolyte polymère solide et de surfaces d'électrodes appliquées sur celui-ci des deux côtés, pour former une unité d'électrodes membranaires, caractérisé en ce que 2 à 10 000 cellules individuelles sont connectées, par superposition en gradins des surfaces d'électrodes (4, 5, 6) d'une cellule individuelle, avec la surface d'électrode opposée (7, 8, 9) de la cellule individuelle suivante en série et forment ainsi une unité d'électrodes membranaires (1) et en ce qu'une structure conductrice transversale, fabriquée à partir d'un matériau conducteur d'électrons, est agencée entre les surfaces d'électrodes superposées (2, 11), la structure conductrice transversale (2, 11) étant acheminée jusqu'aux surfaces d'électrodes externes par leur superposition partielle.

2. Assemblage de cellules individuelles selon la revendication 1, caractérisé en ce que la structure conductrice transversale (2, 11) est acheminée jusqu'à la surface d'électrode externe, la structure conductrice transversale (2, 11) recouvrant presque complètement cette surface d'électrode.

3. Assemblage de cellules individuelles selon la revendication 1 ou 2, caractérisée en ce qu'une structure de distribution (10), qui est conformée de manière à être au moins partiellement perméable au combustible, est agencée sur les surfaces d'électrodes externes et sur la structure conductrice transversale.

4. Assemblage de cellules individuelles selon au moins l'une quelconque des revendications 1 à 3, caractérisé en ce qu'une structure de distribution (10), qui est conformée au moins de manière à être partiellement perméable au combustible, est agencée entre les surfaces d'électrodes externes et la structure conductrice transversale (2, 11).

5. Assemblage de cellules individuelles selon au moins l'une quelconque des revendications 1 à 4, caractérisé en ce que le matériau conducteur d'électrons des structures conductrices transversales (2, 11) est choisi parmi des métaux, des alliages, des variantes de carbone conductrices, des polymères conducteurs ou leurs mélanges.

6. Assemblage de cellules individuelles selon au moins l'une quelconque des revendications 1 à 5, caractérisé en ce que la structure conductrice transversale (2, 11) a une épaisseur de 0,1 à 5 mm.

7. Assemblage de cellules individuelles selon au moins l'une quelconque des revendications 1 à 6, caractérisé en ce que la structure conductrice transversale (2, 11) présente une structure avec une surface non lisse, par exemple, des treillis, des tissus, des structures poreuses ou des structures ayant une surface rêche.

8. Assemblage de cellules individuelles selon au moins l'une quelconque des revendications 1 à 7, caractérisé en ce que la structure de distribution (10) est une structure conductrice d'électrons, par exemple, du papier graphité ou un treillis métallique.

9. Assemblage de cellules individuelles selon au moins l'une quelconque des revendications 1 à 8, caractérisé en ce qu'au moins 2, au maximum 50, unités d'électrodes membranaires unidimensionnelles sont assemblées, ces unités étant respectivement agencées en parallèle et étant connectées en série.

10. Assemblage de cellules individuelles selon au moins l'une quelconque des revendications 1 à 8, caractérisé en ce qu'au moins 2 à au maximum 50 unités d'électrodes membranaires unidimensionnelles sont assemblées, celles-ci étant agencées en parallèle et connectées en parallèle.

11. Utilisation de l'assemblage selon l'une quelconque des revendications 1 à 10 dans une cellule membranaire à électrode polymère (cellule PEM).
